(19) Europäisches Patentamt
European Patent Office
Office européen des brevets

(11) **EP 2 857 917 A1**

(12) **EUROPEAN PATENT APPLICATION**

(43) Date of publication:
08.04.2015 Bulletin 2015/15

(51) Int Cl.:
*G05B 23/02* (2006.01)

(21) Application number: 14187565.8

(22) Date of filing: 02.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 07.10.2013 JP 2013210142

(71) Applicant: Yokogawa Electric Corporation
Tokyo 180-8750 (JP)

(72) Inventors:
• Ohtani, Tetsuya
  Tokyo, 180-8750 (JP)
• Wada, Hidehiko
  Tokyo, 180--8750 (JP)
• Kuroda, Tomohiro
  Tokyo, 180-8750 (JP)

(74) Representative: Henkel, Breuer & Partner
Patentanwälte
Maximiliansplatz 21
80333 München (DE)

(54) **State diagnosing method and state diagnosing apparatus**

(57) A state diagnosing method diagnoses a state of an operation of the diagnosis target based on waveform data. A waveform representing values of time-series data, the time axis of which is configured to set a start time of an operation of the diagnosis target or a changing time of an operation of the diagnosis target as an origin, is obtained as a target waveform. A similarity between a reference waveform representing a normal state or an abnormal state of the diagnosis target and the target waveform is calculated. A state of the diagnosis target is determined based on the similarity.

## FIG. 1

**Description**

BACKGROUND

TECHNICAL FIELD

The present disclosure relates to a state diagnosing method and a state diagnosing apparatus for diagnosing a state of operation based on waveform data.

RELATED ART

Among social infrastructures such as factories, plants, railways, roads, and bridges, there are many facilities that have been extremely aging. Thus, increase of maintenance cost is feared. In this situation, condition based maintenance (CBM), in which conditions of facilities are detected constantly by sensors and then facilities are maintained, checked, overhauled, or replaced according to the their conditions, is more preferable than time based maintenance (TBM), in which facilities are periodically maintained, checked, overhauled, or replaced.

A method for diagnosing a state of a facility, for example, whether the facility is normal or abnormal, from a sensor signal includes a method of determining a state based on a range of values represented by one or plural sensor signals. If a state cannot be determined only based on the range of the values, sometimes, the state of the facility can be determined, based on a waveform represented by values of the sensor signal.

In the case of diagnosing states, such as normal and abnormal states, based on waveform data, generally, e.g., the following method is used. That is, for example, as described in Patent Document 1, first, preprocessing, such as smoothing and abnormal value elimination, is performed on waveform data. If the waveform data is sound data or oscillation data, preprocessing such as conversion to spectrum data using fast Fourier transform (FFT) is performed on the waveform data. Next, a feature amount is calculated and compared to the feature amount of a normal pattern and the feature amount of an abnormal pattern. Various amounts, such as a maximum value, a minimum value, and the number of times of exceeding a threshold value, are used as the feature amount.

[Prior Art Document]

[Patent Document]

>

[Patent Document 1] JP-A-2004-110602

However, the related-art method using a feature amount needs designing the preprocessing method and the feature amount to be used, according to a problem to be solved. For example, several methods have been proposed as a feature amount calculating method to be used in a Mahalanobis-Taguchi (MT) system described in Patent Document 1. However, it takes trial and error to determine what method is chosen, and what value is set to a parameter. Such trial and error usually takes much time. In addition, the quality of the content of a trial-and-error work greatly affects results of a later diagnosis.

SUMMARY

Exemplary embodiments of the invention provide a state diagnosing method and a state diagnosing apparatus which can obtain appropriate diagnosis results without taking a trial-and-error work.

A state diagnosing method for diagnosing a state of an operation of a diagnosis target based on waveform data, comprises:

obtaining, as a target waveform, a waveform representing values of time-series data, the time axis of which is configured to set a start time of an operation of the diagnosis target or a changing time of an operation of the diagnosis target as an origin;

calculating a similarity between a reference waveform representing a normal state or an abnormal state of the diagnosis target and the target waveform; and

determining a state of the diagnosis target, based on the similarity.

According to this state diagnosing method, a diagnosis is made, based on a similarity between a reference waveform and a target waveform. Accordingly, appropriate diagnosis results can be obtained without taking a trial-and-error work.

The reference waveform may be a waveform representing values of time-series data, the time axis of which is configured to set a start time of an operation of the diagnosis target or a changing time of an operation of the diagnosis target in the normal state of the diagnosis target as the origin, or a waveform representing values time-series data, the time axis of which is configured to set a start time of an operation of the diagnosis target or a changing time of an operation of the diagnosis target in the abnormal state of the diagnosis target as the origin.

A plurality of waveforms may be used as the reference waveform; and
the state of the diagnosis target may be determined, as a state corresponding to the reference waveform, the similarity of which is highest.

The similarity may be calculated by comparing the reference waveform with a waveform obtained by shifting, expanding or contracting the target waveform, in a direction of an axis representing the values.

The similarity may be calculated by comparing the reference waveform with a waveform obtained by shifting, expanding or contracting the target waveform, in a direction of the time axis.

A state diagnosing apparatus configured to diagnose a state of an operation of a diagnosis target based on waveform data, comprises:

an obtaining module configured to obtain, as a target waveform, a waveform representing values of time-series data, the time axis of which is configured to set a start time of an operation of the diagnosis target or a changing time an operation of the diagnosis target as an origin;
a calculating module configured to calculate a similarity between a reference waveform representing a normal state or an abnormal state of the diagnosis target and the target waveform obtained by the obtaining module; and
a determining module configured to determine a state of the diagnosis target, based on the similarity calculated by the calculating module.

According to this state diagnosing apparatus, a diagnosis is made, based on the degree of the similarity between the reference waveform and the target waveform. Consequently, appropriate diagnosis results can be obtained without taking a trial-and-error work.

According to the state diagnosing method of the invention, a diagnosis is made, based on a similarity between a reference waveform and a target waveform. Accordingly, appropriate diagnosis results can be obtained without taking a trial-and-error work.

According to the state diagnosing apparatus of the invention, a diagnosis is made, based on the degree of the similarity between the reference waveform and the target waveform. Consequently, appropriate diagnosis results can be obtained without taking a trial-and-error work.

BRIEF DESCRIPTION OF THE DRAWINGS

FIG. 1 is a block diagram illustrating a state diagnosing apparatus according to the invention.

FIG. 2 is a flowchart illustrating an operation of the state diagnosing apparatus according to this embodiment.

FIG. 3A is a diagram illustrating expansion/contraction of a target waveform in a direction of the time axis.

FIG. 3B is a diagram illustrating shift of the target waveform in the direction of the time axis.

FIG. 4A is a diagram illustrating shift of the target waveform in a direction of the axis representing the values of the time-series data.

FIG. 4B is a diagram illustrating expansion/contraction of the target waveform in the direction of the axis representing the values of the time-series data.

DETAILED DESCRIPTION

Hereinafter, an embodiment of a state diagnosing apparatus according to the invention is described.

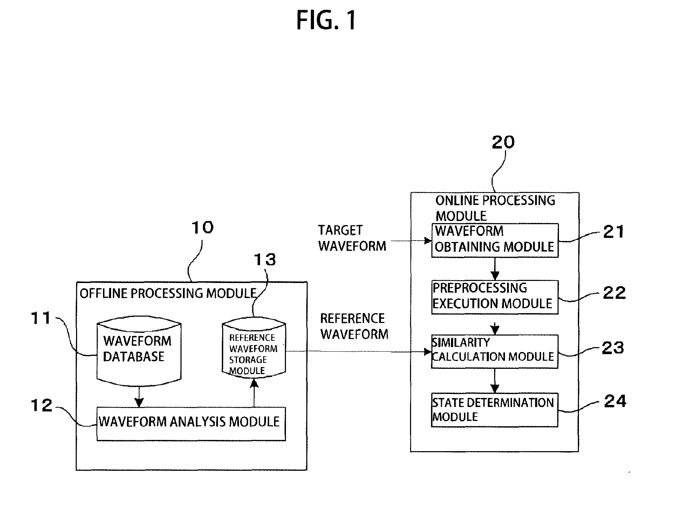

FIG. 1 is a block diagram illustrating a state diagnosing apparatus according to the invention.
As illustrated in FIG. 1, the state diagnosing apparatus according to this embodiment includes an offline processing module 10 for obtaining a reference waveform, and an online processing module 20 for calculating a waveform similarity by online.

As illustrated in FIG. 1, the offline processing module 10 includes a waveform database 11, a waveform analysis module 12, and a reference waveform storage module 13. The waveform database 11 stores past response waveforms during a non-stationary operation time including a time of starting each of the various facilities and systems, and a time of changing an operation of each of the various facilities and systems. The waveform analysis module 12 analyzes waveforms stored in the waveform database 11 and extracts or generates reference waveforms. The reference waveform storage module 13 stores the reference waveforms in the waveform analysis module 12.

The online processing module 20 includes a waveform obtaining module 21, a preprocessing execution module 22, a similarity calculation module 23, and a state determination module 24. The waveform obtaining module 21 obtains, by online, target waveforms which are current response waveforms during a non-stationary operation such as a time of starting each of the various facilities and systems or a time of changing an operation of each of the various facilities and systems. The preprocessing execution module 22 performs preprocessing on the target waveforms obtained by the waveform obtaining module 21. The similarity calculation module 23 calculates the similarity between the target waveform obtained by the waveform obtaining module 21 and a reference waveform given from the reference waveform storage module 13 by comparing the target waveform, on which the preprocessing is performed by the preprocessing execution module 22, with the reference waveform. The state determination module 24 determines a state of each of the various facilities and systems, which is represented by the target waveform, based on the similarity calculated by the similarity calculation module 23.

Next, an operation of the state diagnosing apparatus according to this embodiment is described hereinafter.

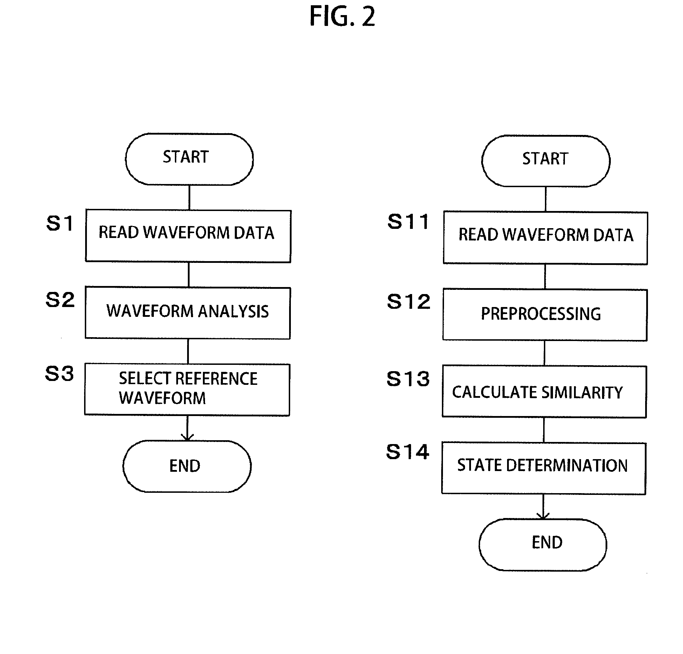

FIG. 2 is a flowchart illustrating an operation of the state diagnosing apparatus according to this embodiment.

Steps S1 to S3 in FIG. 2 illustrate an operation of the offline processing module 10.

In step S1 in FIG. 2, a plurality of waveforms stored in the waveform database 11 is read into the waveform analysis module 12.

Next, in step S2, each of waveforms read from the waveform database 11 is analyzed using the waveform analysis module 12. Thus, a waveform suitable as a reference waveform is extracted or generated.

Next, in step S3, the waveform extracted or generated in step S2 is stored in the reference waveform storage module 13 as a reference waveform. Then, processing is terminated.

In the step S2, a reference waveform is selected using the waveform analysis module 12. Here, a waveform corresponding to a normal state of each of the various facilities and systems, a waveform corresponding to an abnormal state of each of the various facilities and system, and the like can be extracted substantially by human determination. Alternatively, waveform clustering analysis techniques can be used, instead of human determination. In this case, the plurality of waveforms stored in the waveform database 11 are classified by cluster analysis into several sets of waveforms (clusters), such as a normal waveform set and an abnormal waveform set (respectively corresponding to the normal state of each of the various facilities and systems, and the abnormal state of each of the various facilities and systems). Then, a center waveform of each cluster is obtained and set as the reference waveform. The center waveform can be calculated using an average of the waveforms of each cluster.

If there are plural modes corresponding to the normal state of each of the various facilities and systems, or if there are plural modes corresponding to the abnormal state of each of the various facilities and systems, plural waveforms may be prepared corresponding to each mode as reference waveforms respectively representing the normal state and the abnormal state.

Steps S11 to S 14 illustrate an operation of the online processing module 20.

In step S11 in FIG. 2, the waveform obtaining module 21 obtains, by online, a target waveform which is a current response waveform during a non-stationary operation time such as a time of starting an operation of each of the various facilities and systems or a time of changing an operation of each of the various facilities and systems.

Next, in step S12, the preprocessing execution module 22 performs preprocessing on the target waveform obtained by the waveform obtaining module 21.

Next, in step S13, the similarity calculation module 23 compares the target waveform, on which the preprocessing is performed by the preprocessing execution module 22, with the reference waveform obtained from the reference waveform storage module 13 so as to calculate the similarity between the target waveform and the reference waveform.

Next, in step S14, the state determination module 24 determines a state of each of the various facilities and systems, which is represented by the target waveform, based on the similarity calculated by the similarity calculation module 23. Then, the processing is terminated.

In the step S13, the similarity between the target waveform and the reference waveform is calculated in a state in which the time axis of the target waveform and the time axis of the reference waveform are set such that the time of starting an operation or the time of changing an operation is the same time. That is, in step S12, waveforms which mismatch the reference waveform in the time of starting an operation or the time of changing an operation are neither extracted nor generated as a target waveform.

In the step 13, the similarity calculation module 23 expresses the two waveforms (i.e., the target waveform and the reference waveform) in vector-form, defines a distance between vectors, and evaluates that if the distance is smaller, the similarity is higher. The distance is, e.g., the following Euclidean distance.

First, the similarity calculation module 23 expresses the reference waveform using n-samples x(1) to x(n), and also expresses the target waveform using n-samples y(1) to y(n). At that time, the Euclidean distance between the reference waveform and the target waveform is expressed by Equation (1).

$$\text{Euclidean distance} \quad = \sqrt{\sum_{i=1}^{n}(x(i)-y(i))^2}$$

$$\cdot \; \cdot \; \cdot \; \cdot \; \cdot \quad \text{Equation (1)}$$

Incidentally, when the similarity is calculated, a correlation coefficient may be used, instead of the Euclidean distance. In this case, if the correlation coefficient is larger, the similarity is evaluated to be higher. In the case that the reference waveform is expressed using n-samples x(1) to x(n), and that the target waveform is expressed using n-samples y(1) to y(n), the correlation coefficient of the reference waveform and the target waveform is expressed by Equation (2).

$$Correlation \;\; Coefficient = \frac{\sum_{i=1}^{n}(x(i)-\bar{x})(y(i)-\bar{y})}{\sqrt{\sum_{i=1}^{n}(x(i)-\bar{x})^2}\sqrt{\sum_{i=1}^{n}(y(i)-\bar{y})^2}}$$

$$\cdot \; \cdot \; \cdot \; \cdot \; \cdot \quad \text{Equation (2)}$$

*Herein, $\bar{x}$ and $\bar{y}$ are averages of x and y, respectively.*

As described above, if there are plural modes in the normal case, or if there are plural modes in the abnormal state, plural waveforms can be used as reference waveforms representing the normal or abnormal state corresponding to each mode. In this case, in the step S14, it can be determined that the state represented by the target waveform, i.e., the state of each of the various facilities or systems is a state corresponding to the reference waveform which is highest in the similarity calculated by the similarity calculation module 23 (i.e., a normal state corresponding to a specific mode, or an abnormal state corresponding to a specific mode).

The preprocessing in the step S12 includes abnormal value elimination, smoothing, and variation range normalization.

The abnormal value elimination includes the elimination of abnormal values generated by a failure and calibration of a sensor, and the elimination of abnormal values due to the lack of values, which is caused by communication errors. In addition, noise components can be suppressed by smoothing values. If time-series data stored in the waveform database 11 (see FIG. 1) includes many abnormal values and noises due to the failure and the calibration of a sensor and to the lack of values, which is caused by communication errors, the value of the similarity may seriously be affected by these causes. Thus, the similarity may incorrectly be digitized. Such inconvenience can be avoided by performing preprocessing such as the elimination of abnormal values from the time-series data, or reduction of noise components by the smoothing (filtering processing).

Incidentally, the normalization of the Euclidean distance may be employed as the variation range normalization. In this case, known methods can widely be used. For example, the normalization may be performed so that the variance of the two waveforms (i.e., the target waveform and the reference waveform) or the difference (the maximum value - the minimum value) of each of the two waveforms is 1.

In addition, corrections made by performing the expansion/contraction of the target waveform in a direction of the time axis, the shift of the target waveform in a direction of an axis representing values of time-series data, and the expansion/contraction of the target waveform in the direction of the axis representing the values of the time-series data may be performed as preprocessing.

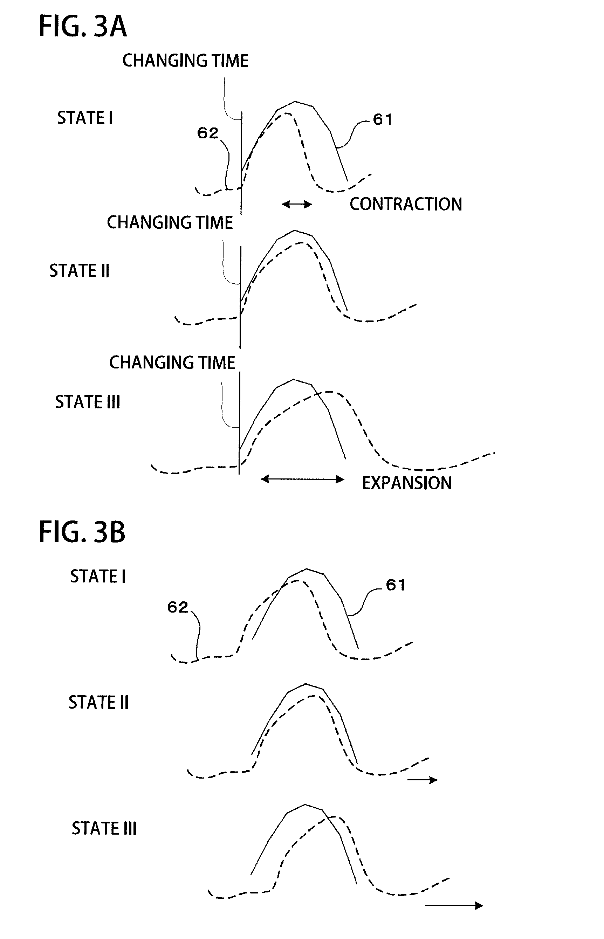

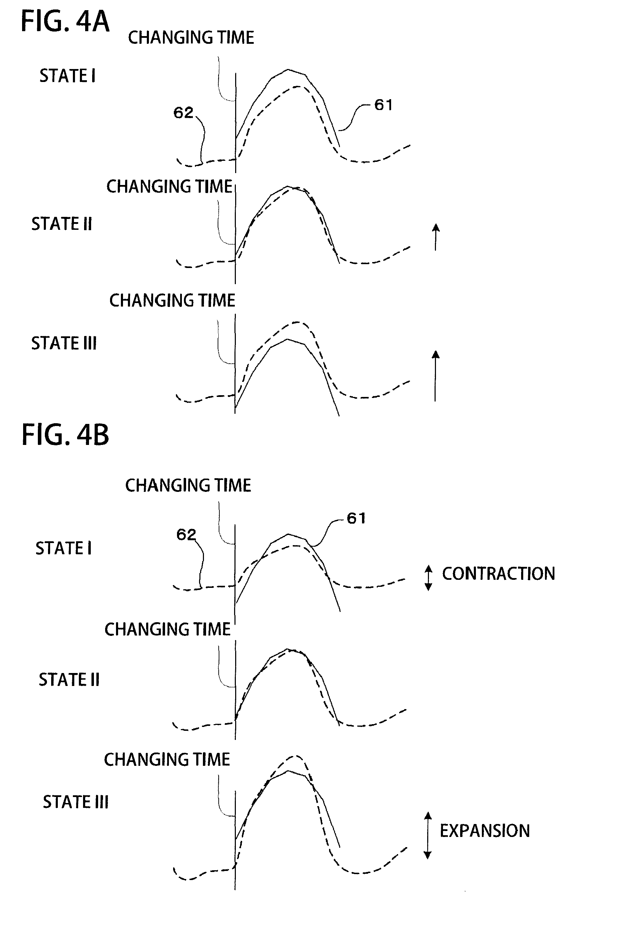

FIGS. 3A, 3B, 4A, and 4B are diagrams illustrating how the corrections are performed on the waveforms by the preprocessing execution module 22. In FIGS. 3A, 3B, 4A, and 4B, solid lines 61 represent the reference waveforms, and dashed lines 62 represent the target waveforms.

FIG. 3A illustrates the expansion/contraction of the target waveform in the direction of the time axis. FIG. 3A shows how the target waveform represented by the dashed line 62 is expanded in the direction of the time axis (lateral direction in this figure) serially in the order of states I, II, and III. In FIG. 3A, state I represents a state in which the target waveform is contracted in the direction of the time axis in comparison with state II. State III represents a state in which the target waveform is expanded in the direction of the time axis in comparison with state II. FIG. 3B illustrates the shift of the target waveform in the direction of the time axis. FIG. 3B shows how the target waveform represented by the dashed line 62 is shifted in the direction of the time axis (right-hand direction in this figure) serially in the order of states I, II, and III.

FIG. 4A illustrates the shift of the target waveform in the direction of the axis representing the values of the time-series data. FIG. 4A shows how the target waveform represented by the dashed line 62 is shifted in the direction of the axis representing the values of the time-series data (upward direction in this figure) serially in the order of states I, II, and III.

FIG. 4B illustrates the expansion/contraction of the target waveform in the direction of the axis representing the values of the time-series data. FIG. 4B shows how the target waveform represented by the dashed line 62 is expanded in the direction of the axis representing the values of the time-series data (up-down direction in this figure) serially in the order of states I, II, and III. In FIG. 4B, state 1 represents a state in which the target waveform is contracted in the direction of the axis representing the values of the time-series data, in comparison with state II. State III represents a state in which the target waveform is expanded in the direction of the axis representing the values of the time-series data, in comparison with state II.

Incidentally, even when any correction including the expansion/contraction in the direction of the time axis is performed on the target waveform, it is necessary to calculate the similarity in a state in which the origin of the time axis of each of the target waveform and the reference waveform, which corresponds to the time of starting an operation or to the time of changing an operation, is always made to coincide with the origin of the time axis of the other waveform. FIGS. 3A, 3B, 4A, and 4B illustrate examples of setting the origin of each time axis at a changing time of an operation.

Even if the two waveforms substantially similar in shape are differ from each other in phase, and differ from each other in data value, and somewhat in the position in the direction of the time axis or in size, a high similarity can be obtained by combining the shift with the expansion/contraction as illustrated in FIGS. 3A, 3B, 4A, and 4B, and searching for a combination corresponding to the highest similarity. Thus, a target waveform substantially similar to the reference waveform can surely be extracted. Incidentally, the shift in the direction of the time axis needs to be performed in a range where a state is ensured in which the positions in the direction of the time axis of the target waveform and the reference waveform at the start time of an operation or the changing time of an operation substantially coincide with each other. The start time of an operation or the changing time of an operation in both of the waveforms can accurately be matched with each other by fine shift in the direction of the time axis.

For example, the influence of a flow rate change and a rate of change in temperature due to the difference in capacity among containers existing in a plant can be eliminated by the expansion/contraction in the direction of the time axis. Thus, a substantially similar target waveform can surely be extracted. For example, if the quantity of production or the capacity of a tank changes during an operation of a plant, it is considered that the data value of a process quantity, and a time taken to change are varied. Even in such a case, the similarity of waveforms peculiar to the plant or to an operation is searchable without failing to detect. If a pressure ratio rather than a data value is questioned concerning the time-series variation of pressure, a target waveform substantially similar to the reference waveform can surely be extracted by the expansion/contraction in the direction of an axis representing the values of pressure. In addition, if a ratio of the data value is questioned, an axis representing data values may be a logarithmic axis.

According to the invention, the time of starting an engine or the time of accelerating an engine can be cited as an example of the "start time of an operation of a diagnosis target or the changing time of an operation of the diagnosis target". In this case, the state of the engine can be diagnosed by setting, as a target waveform, a response waveform corresponding to data representing the number of revolutions of an engine.

In addition, the target waveform is not limited to the response waveform corresponding to data representing the number of revolutions of an engine. Any waveforms based on arbitrary measurement values of temperature, pressure, and the like may be used as the target waveforms.

In addition, facilities and systems to be diagnosed are not limited to specific ones. In all apparatuses including plant facilities and engines, response waveforms at the start time of operations of moving, rotating, flowing fluids, applying electric current, and heating and the like, or at the changing time of an operation, based on a setting change and the like, can widely be used as target waveforms. Thus, the diagnosis of the apparatus can be performed.

As described above, according to the state diagnosing method and the state diagnosing apparatus of the invention, a diagnosis is made, based on the similarity between a reference waveform and a target waveform. Accordingly, appropriate diagnosis results can be obtained without taking a trial-and-error work. The similarity can be calculated using the Euclidean distance, or the correlation coefficient. Consequently, the state diagnosing method the state diagnosing apparatus according to the invention eliminate the need for operations of setting individual feature amounts and parameters according to a diagnosis target.

The range of application of the invention is not limited to the above embodiment. The invention can widely be applied to a state diagnosing method or the state diagnosing apparatus for diagnosing the state of an operation, based on waveform data.

**Claims**

1. A state diagnosing method for diagnosing a state of an operation of a diagnosis target based on waveform data, comprising:

    obtaining, as a target waveform, a waveform representing values of time-series data, the time axis of which is configured to set a start time of an operation of the diagnosis target or a changing time of an operation of the diagnosis target as an origin;
    calculating a similarity between a reference waveform representing a normal state or an abnormal state of the diagnosis target and the target waveform; and
    determining a state of the diagnosis target, based on the similarity.

2. The state diagnosing method according to claim 1, wherein:

    the reference waveform is a waveform representing values of time-series data, the time axis of which is configured to set a start time of an operation of the diagnosis target or a changing time of an operation of the diagnosis target in the normal state of the diagnosis target as the origin, or a waveform representing values time-series data, the time axis of which is configured to set a start time of an operation of the diagnosis target or a changing time of an operation of the diagnosis target in the abnormal state of the diagnosis target as the origin.

3. The state diagnosing method according to claim 1 or 2, wherein:

    a plurality of waveforms are used as the reference waveform; and
    the state of the diagnosis target is determined, as a state corresponding to the reference waveform, the similarity of which is highest.

4. The state diagnosing method according to one of claims 1 to 3, wherein:

    the similarity is calculated by comparing the reference waveform with a waveform obtained by shifting, expanding or contracting the target waveform, in a direction of an axis representing the values.

5. The state diagnosing method according to one of claims 1 to 4, wherein:

    the similarity is calculated by comparing the reference waveform with a waveform obtained by shifting, expanding or contracting the target waveform, in a direction of the time axis.

6. A state diagnosing apparatus configured to diagnose a state of an operation of a diagnosis target based on waveform data, comprising:

    an obtaining module configured to obtain, as a target waveform, a waveform representing values of time-series data, the time axis of which is configured to set a start time of an operation of the diagnosis target or a changing time an operation of the diagnosis target as an origin;
    a calculating module configured to calculate a similarity between a reference waveform representing a normal state or an abnormal state of the diagnosis target and the target waveform obtained by the obtaining module; and
    a determining module configured to determine a state of the diagnosis target, based on the similarity calculated by the calculating module.

# FIG. 1

# FIG. 2

START

S1 READ WAVEFORM DATA

S2 WAVEFORM ANALYSIS

S3 SELECT REFERENCE WAVEFORM

END

START

S11 READ WAVEFORM DATA

S12 PREPROCESSING

S13 CALCULATE SIMILARITY

S14 STATE DETERMINATION

END

## FIG. 3A

CHANGING TIME

STATE I

62

61

CONTRACTION

CHANGING TIME

STATE II

CHANGING TIME

STATE III

EXPANSION

## FIG. 3B

STATE I

62

61

STATE II

STATE III

# FIG. 4A

CHANGING TIME

STATE I

62

61

CHANGING TIME

STATE II

↑

CHANGING TIME

STATE III

↑

# FIG. 4B

CHANGING TIME

STATE I

62

61

↕ CONTRACTION

CHANGING TIME

STATE II

CHANGING TIME

STATE III

↕ EXPANSION

Europäisches
Patentamt

European
Patent Office

Office européen
des brevets

# EUROPEAN SEARCH REPORT

Application Number

EP 14 18 7565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Karen Zita Haigh ET AL: "Visual Query Language: Finding patterns in and relationships among time series data", Seventh Workshop on Mining Scientific and Engineering Datasets, 24 April 2004, Lake Buena Vista, FL, USA, 24 April 2004 (2004-04-24), XP055094647, Retrieved from the Internet: URL:http://www-cgi.cs.cmu.edu/afs/cs/usr/k haigh/www/papers/haigh-MSD04.pdf [retrieved on 2013-12-20] * the whole document * | 1-6 | INV. G05B23/02 |
| X | PAOLO BUONO ET AL: "<title>Interactive pattern search in time series</title>", PROCEEDINGS OF SPIE, vol. 5669, 11 March 2005 (2005-03-11), pages 175-186, XP055094620, ISSN: 0277-786X, DOI: 10.1117/12.587537 * the whole document * | 1-6 | |
| X | EP 2 172 820 A1 (BASF SE [DE]) 7 April 2010 (2010-04-07) | 1,6 | TECHNICAL FIELDS SEARCHED (IPC) |
| Y | * the whole document * | 2-5 | G05B |
| X | FABIAN MOERCHEN: "Time Series Knowledge Mining", 20060101 , 1 January 2006 (2006-01-01), page complete, XP007906785, Retrieved from the Internet: URL:http://www.mybytes.de/papers/moerchen0 6tskm.pdf * page 23 - page 26 * * page 39 - page 40 * | 1,6 | |

-/--

The present search report has been drawn up for all claims

| Place of search | Date of completion of the search | Examiner |
|---|---|---|
| Munich | 2 February 2015 | Marrone, Fabrizio |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 14 18 7565

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AGRAWAL R ET AL: "Fast similarity search in the presence of noise, scaling, and translation in time-series databases", PROCEEDINGS OF THE INTERNATIONAL CONFERENCE ON VERY LARGEDATA BASES, XX, XX, 11 September 1995 (1995-09-11), pages 490-501, XP002344786, * the whole document * | 2-5 | |

-----

TECHNICAL FIELDS
SEARCHED      (IPC)

The present search report has been drawn up for all claims

| Place of search | Date of completion of the search | Examiner |
|---|---|---|
| Munich | 2 February 2015 | Marrone, Fabrizio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 18 7565

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2015

| Patent document cited in search report | Publication date | Patent family member(s) | Publication date |
|---|---|---|---|
| EP 2172820 A1 | 07-04-2010 | NONE | |

EPO FORM P0459

For more details about this annex : see Official Journal of the European Patent Office, No. 12/82